(19) Europäisches Patentamt
European Patent Office
Office européen des brevets

(11) EP 1 487 048 A2

(12) # EUROPEAN PATENT APPLICATION

(43) Date of publication:
**15.12.2004 Bulletin 2004/51**

(51) Int Cl.[7]: **H01M 10/40**

(21) Application number: **04013601.2**

(22) Date of filing: **09.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **11.06.2003 JP 2003166863**

(71) Applicant: **SONY CORPORATION**
**Tokyo (JP)**

(72) Inventors:
- **Adachi, Momoe**
**Shinagawa-ku Tokyo (JP)**
- **Fujita, Shigeru**
**Shinagawa-ku Tokyo (JP)**
- **Aoki, Masahiro**
**Shinagawa-ku Tokyo (JP)**
- **Akashi, Hiroyuki**
**Shinagawa-ku Tokyo (JP)**
- **Naruse, Yoshiaki**
**Shinagawa-ku Tokyo (JP)**

(74) Representative: **Rupp, Christian, Dipl.Phys. et al**
**Mitscherlich & Partner**
**Patent- und Rechtsanwälte**
**Sonnenstrasse 33**
**80331 München (DE)**

(54) **Battery**

(57) Provided is a battery capable of improving battery characteristics such as cycle characteristics. The battery comprises a spirally wound electrode body including a cathode and an anode spirally wound with a separator in between. The capacity of the anode includes a capacity component by insertion and extraction of light metal and a capacity component by precipitation and dissolution of the light metal, and is represented by the sum of them. The separator is impregnated with an electrolyte solution formed through dissolving a lithium salt in a solvent. As the electrolyte salt, diffuoro[oxalato-O,O']lithium borate, tetrafluoro[oxalato-O,O']lithium phosphate or difluorobis[oxalato-O,O']lithium phosphate is used. By the formation of a stable coating, decomposition of the solvent and a reaction between precipitated lithium metal and the solvent can be prevented.

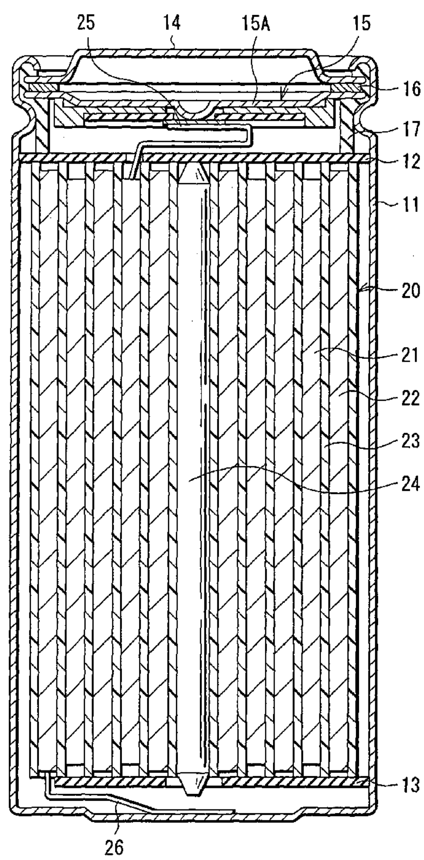


FIG. 1



Printed by Jouve, 75001 PARIS (FR)

## Description

BACKGROUND OF THE INVENTION

1. Field of the Invention

The present invention relates to a battery comprising a cathode, an anode and an electrolyte, and more specifically a battery in which the capacity of the anode includes a capacity component by insertion and extraction of light metal and a capacity component by precipitation and dissolution of the light metal, and is represented by the sum of them.

2. Description of the Related Art

In recent years, reduction in size and weight of portable electric devices typified by cellular phones, PDAs (personal digital assistants) or laptop computers has been vigorously pursued, and as part of the reduction, an improvement in energy density of batteries, specifically secondary batteries as power sources for the devices has been strongly required.

As secondary batteries which can obtain a high energy density, for example, a lithium-ion secondary battery using a material capable of inserting and extracting lithium (Li) such as a carbon material for the anode is cited. The lithium-ion secondary battery is designed so that lithium inserted into an anode material is always in an ion state, so the energy density is highly dependent on the number of lithium ions capable of being inserted into the anode material. Therefore, in the lithium-ion secondary battery, it is expected that when the amount of insertion of lithium ions is increased, the energy density can be further improved. However, the amount of insertion of graphite, which is considered at present to be a material capable of the most effectively inserting and extracting lithium ions is theoretically limited to 372 mAh per gram on an electricity amount basis, and recently the amount of insertion of graphite has been approaching the limit by active development.

Further, as the secondary battery capable of obtaining a high energy density, a lithium secondary battery using lithium metal for an anode, and using only precipitation and dissolution reactions of lithium metal for an anode reaction is also cited. In the lithium secondary battery, a theoretical electrochemical equivalent of the lithium metal is as large as 2054 $mAh/cm^3$, which is 2.5 times larger than that of graphite used in the lithium-ion secondary battery, so it is expected that the lithium secondary battery can obtain a much higher energy density than the lithium-ion secondary battery. A large number of researchers have been conducting research and development aimed at putting the lithium secondary battery to practical use (for example, "Lithium Batteries" edited by Jean-Paul Gabano, Academic Press, 1983, London, New York).

However, the lithium secondary battery has a problem that when charge and discharge are repeated, a large decline in its discharge capacity occurs, so it is difficult to put the lithium secondary battery to practical use. The decline in the capacity occurs because the lithium secondary battery uses a precipitation-dissolution reaction of the lithium metal in the anode. In accordance with charge and discharge, the volume of the anode largely increases or decreases by the amount of the capacity corresponding to lithium ions transferred between the cathode and the anode, so the volume of the anode is largely changed, thereby it is difficult for a dissolution reaction and a recrystallization reaction of a lithium metal crystal to reversibly proceed. Further, the higher energy density the lithium secondary battery achieves, the more largely the volume of the anode is changed, and the more pronouncedly the capacity declines.

Therefore, the inventors of the invention have developed a novel secondary battery in which the capacity of the anode includes a capacity component by insertion and extraction of lithium and a capacity component by precipitation and dissolution of lithium, and is represented by the sum of them (refer to International Publication No. WO 01/22519). In the secondary battery, a carbon material capable of inserting and extracting lithium is used for the anode, and lithium is precipitated on a surface of the carbon material during charge. The secondary battery holds promise of improving cycle characteristics while achieving a higher energy density.

However, in order to put the secondary battery to practical use, it is required to achieve a further improvement in the characteristics and higher stability. For this purpose, research and development of not only electrode materials but also electrolytes are absolutely necessary. More specifically, there is a problem that cycle characteristics easily decline due to decomposition of an electrolyte or a reaction between precipitated lithium metal and the electrolyte.

SUMMARY OF THE INVENTION

In view of the foregoing, it is an object of the invention to provide a battery capable of improving battery characteristics such as cycle characteristics.

A battery according to the invention comprises: a cathode; an anode: and an electrolyte, wherein the capacity

of the anode includes a capacity component by insertion and extraction of light metal and a capacity component by precipitation and dissolution of the light metal, and is represented by the sum of them, and the electrolyte includes a light metal salt represented by Chemical Formula 1.

[Chemical Formula 1]

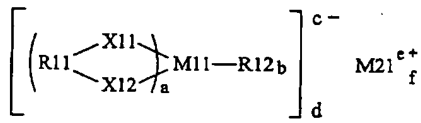

In the formula, R11 represents a -C(=O)-R21-C(=O)- group (wherein R21 represents an alkylene group, a halogenated alkylene group, an arylene group or a halogenated arylene group) or a -C(=O)-C(=O)-group, R12 represents halogen, an alkyl group, a halogenated alkyl group, an aryl group or a halogenated aryl group, X11 and X12 represent oxygen (O) or sulfur (S), M11 represents an transition metal element, or a Group 3B element, a Group 4B element or a Group 5B element in the short form of the periodic table of the elements, M21 represents a Group 1A element or a Group 2A element in the short form of the periodic table of the elements or aluminum (Al), a is an integer of 1 to 4, b is an integer of 0 to 8, and c, d, e and f each are an integer of 1 to 3.

In the battery according to the invention, the light metal salt represented by Chemical Formula 1 is included, so decomposition of the electrolyte and a reaction between light metal precipitated by a precipitation-dissolution reaction of the light metal and the electrolyte can be prevented. Therefore, light metal precipitation-dissolution efficiency in the anode can be improved, thereby battery characteristics such as cycle characteristics can be improved.

Other and further objects, features and advantages of the invention will appear more fully from the following description.

BRIEF DESCRIPTION OF THE DRAWINGS

FIG. 1 is a sectional view of a secondary battery according to an embodiment of the invention; and
FIG. 2 is an enlarged sectional view of a part of a spirally wound electrode body in the secondary battery shown in FIG. 1.

DETAILED DESCRIPTION OF THE PREFERRED EMBODIMENTS

A preferred embodiment of the invention will be described below in more detail below referring to the accompanying drawings.

FIG. 1 shows a sectional view of a secondary battery according to an embodiment of the invention. The secondary battery is a so-called cylindrical type, and comprises a spirally wound electrode body 20 including a strip-shaped cathode 21 and a strip-shaped anode 22 spirally wound with a separator 23 in between in a substantially hollow cylindrical-shaped battery can 11. The battery can 11 is made of, for example, nickel (Ni)-plated iron (Fe). An end portion of the battery can 11 is closed, and the other end portion thereof is opened. In the battery can 11, a pair of insulating plates 12 and 13 are disposed so that the spirally wound electrode body 20 is sandwiched therebetween in a direction perpendicular to a peripheral winding surface.

In the opened end portion of the battery can 11, a battery cover 14 and, a safety valve mechanism 15 and a PTC device (positive temperature coefficient device) 16 disposed inside the battery cover 14 are mounted through caulking by a gasket 17, and the interior of the battery can 11 is sealed. The battery cover 14 is made of, for example, the same material as that of the battery can 11. The safety valve mechanism 15 is electrically connected to the battery cover 14 through the PTC device 16, and when internal pressure in the battery increases to higher than a certain extent due to an internal short circuit or external application of heat, a disk plate 15A is flipped so as to disconnect the electrical connection between the battery cover 14 and the spirally wound electrode body 20. When a temperature rises, the PTC device 16 limits a current by an increased resistance, thereby resulting in preventing abnormal heat generation by a large current. The gasket 17 is made of, for example, an insulating material, and its surface is coated with asphalt.

The spirally wound electrode body 20 is wound around, for example, a center pin 24. A cathode lead 25 made of aluminum (Al) or the like is connected to the cathode 21 of the spirally wound electrode body 20, and an anode lead

26 made of nickel or the like is connected to the anode 22. The cathode lead 25 is welded to the safety valve mechanism 15 so as to be electrically connected to the battery cover 14, and the anode lead 26 is welded and electrically connected to the battery can 11.

FIG. 2 shows an enlarged view of a part of the spirally wound electrode body 20 shown in FIG. 1. The cathode 21 has, for example, a structure in which a cathode mixture layer 21B is disposed on both sides of a cathode current collector 21A having a pair of surfaces facing each other. In addition, the cathode mixture layer 21B may be disposed on only one side of the cathode current collector 21A, although it is not shown. The cathode current collector 21A is made of, for example, metal foil such as aluminum (Al) foil, nickel foil or stainless foil with a thickness of approximately from 5 μm to 50 μm. The cathode mixture layer 21B has, for example, a thickness of 60 μm to 250 μm, and includes a cathode material capable of inserting and extracting lithium which is light metal. Further, when the cathode mixture layer 21B is disposed on both sides of the cathode current collector 21A, the thickness of the cathode mixture layer 21B means the total thickness thereof.

In order to achieve a higher energy density, the cathode material capable of inserting and extracting lithium preferably includes, for example, a lithium-containing compound including lithium, a transition metal element and oxygen (O), and at least one kind selected from the group consisting of cobalt (Co), nickel (Ni), manganese (Mn) and iron is more preferably included as the transition metal element. Examples of such a lithium-containing compound include $LiCoO_2$, $LiNiCoO_2$, $LiMn_2O_4$ and $LiFePO_4$.

For example, after a carbonate, a nitrate, an oxide or a hydroxide including lithium, and a carbonate, a nitrate, an oxide or a hydroxide including a transition metal are mixed so as to have a desired composition, and the mixture is pulverized, the pulverized mixture is fired at a temperature ranging from 600°C to 1000°C in an oxygen atmosphere, thereby the cathode material is prepared.

The cathode mixture layer 21B includes, for example, an electronic conductor, and may further include a binder, if necessary. Examples of the electronic conductor include carbon materials such as graphite, carbon black and ketjen black, and one kind or a mixture including two or more kinds selected from them is used. In addition to the carbon materials, any electrically conductive material such as a metal material or an electrically conductive high molecular weight material may be used. Examples of the binder include synthetic rubber such as styrene butadiene rubber, fluorine rubber or ethylene propylene diene rubber and a high molecular weight material such as polyvinylidene fluoride, and one kind or a mixture including two or more kinds selected from them is used. For example, as shown in FIG. 1, when the cathode 21 and the anode 22 are spirally wound, the styrene butadiene rubber, the fluorine rubber or the like having high elasticity is preferably used as the binder.

The anode 22 has, for example, a structure in which an anode mixture layer 22B is disposed on both sides of an anode current collector 22A having a pair of surfaces facing each other. The anode mixture layer 22B may be disposed on only one side of the anode current collector 22A, although it is not shown. The anode current collector 22A is made of, for example, metal foil having excellent electrochemical stability, electric conductivity and mechanical strength such as copper foil, nickel foil or stainless foil. More specifically, the copper foil is the most preferable because the copper foil has high electric conductivity. The anode current collector 22A preferably has a thickness of, for example, approximately 5 μ m to 40 μm. When the thickness of the anode current collector 22A is thinner than 5 μm, the mechanical strength declines, so the anode current collector 22A is easily broken during a manufacturing process, thereby production efficiency declines. On the other hand, when it is thicker than 40 μm, a volume ratio of the anode current collector 22A in the battery becomes larger than necessary, so it is difficult to increase the energy density.

The anode mixture layer 22B includes one kind or two or more kinds selected from anode materials capable of inserting and extracting lithium which is light metal, and may further include, for example, the same binder as that included in the cathode mixture layer 21B, if necessary. The anode mixture layer 22B has a thickness of, for example, 40 μm to 250 μm. When the anode mixture layer 22B is disposed on both sides of the anode current collector 22A, the thickness of the anode mixture layer 22B means the total thickness thereof.

In this description, insertion and extraction of light metal mean that light metal ions are electrochemically inserted and extracted without losing their ionicity. It includes not only the case where inserted lithium metal exists in a perfect ion state but also the case where the inserted lithium metal exists in an imperfect ion state. As these cases, for example, insertion by electrochemical intercalation of light metal ions into graphite is cited. Further, insertion of the light metal into an alloy including an intermetallic compound, or insertion of the light metal by forming an alloy can be cited.

Examples of the anode material capable of inserting and extracting lithium include carbon materials such as graphite, non-graphitizable carbon and graphitizable carbon. These carbon materials are preferable, because a change in the crystalline structure which occurs during charge and discharge is extremely small, so a higher charge-discharge capacity and superior cycle characteristics can be obtained. Further, graphite is more preferable, because its electrochemical equivalent is large, and a higher energy density can be obtained.

For example, graphite with a true density of 2.10 $g/cm^3$ or over is preferable, and graphite with a true density of 2.18 $g/cm^3$ or over is more preferable. In order to obtain such a true density, a c-axis crystalline thickness of a (002)

plane is required to be 14.0 nm or over. Moreover, the spacing of (002) planes is preferably less than 0.340 nm, and more preferably within a range from 0.335 nm to 0.337 nm inclusive.

The graphite may be natural graphite or artificial graphite. The artificial graphite can be obtained through the following steps, for example. An organic material is carbonized, and high-temperature heat treatment is carried out on the carbonized organic material, then the organic material is pulverized and classified so as to obtain the artificial graphite. The high-temperature treatment is carried out in the following steps. For example, the organic material is carbonized at 300°C to 700°C in an airflow of an inert gas such as nitrogen ($N_2$), if necessary, and then the temperature rises to 900°C to 1500°C at a rate of 1°C to 100°C per minute, and the temperature is kept for 0 to 30 hours to calcine the organic material, then the organic material is heated to 2000°C or over, preferably 2500°C or over, and the temperature is kept for an adequate time.

As the organic material as a starting material, coal or pitch can be used. As the pitch, for example, a material which can be obtained by distillation (vacuum distillation, atmospheric distillation or steam distillation), thermal polycondensation, extraction, and chemical polycondensation of tars which can be obtained by thermally cracking coal tar, ethylene bottom oil, crude oil or the like at high temperature, asphalt or the like, a material produced during destructive distillation of wood, a polyvinyl chloride resin, polyvinyl acetate, polyvinyl butyrate, or a 3,5-dimethylphenol resin is cited. These coals and pitches exist in a liquid state around at 400°C at the highest during carbonization, and by keeping the coals and pitches at the temperature, aromatic rings are condensed and polycycled, so the aromatic rings are aligned in a stacking arrangement. After that, a solid carbon precursor, that is, semi-coke is formed at approximately 500°C or over (liquid-phase carbonization process).

Moreover, as the organic material, a condensed polycyclic hydrocarbon compound such as naphthalene, phenanthrene, anthracene, triphenylene, pyrene, perylene, pentaphene or pentacene, a derivative thereof (for example, carboxylic acid, carboxylic acid anhydride, carboxylic acid imide of the above compound), or a mixture thereof can be used. Further, a condensed heterocyclic compound such as acenaphthylene, indole, isoindole, quinoline, isoquinoline, quinoxaline, phthalazine, carbazole, acridine, phenazine or phenanthridine, a derivative thereof, or a mixture thereof can be used.

In addition, pulverization may be carried out before or after carbonization and calcination, or during a rise in temperature before graphitization. In these cases, the material in powder form is heated for graphitization in the end. However, in order to obtain graphite powder with a higher bulk density and higher fracture strength, it is preferable that after the material is molded, the molded material is heated, then the graphitized molded body is pulverized and classified.

For example, in order to form the graphitized molded body, after coke as a filler and binder pitch as a molding agent or a sintering agent are mixed and molded, a firing step in which the molded body is heated at a low temperature of 1000°C or less and a step of impregnating the fired body with the molten binder pitch are repeated several times, and then the body is heated at high temperature. The binder pitch with which the fired body is impregnated is carbonized by the above heat treatment process so as to be graphitized. In this case, the filler (coke) and the binder pitch are used as the materials, so they are graphitized as a polycrystal, and sulfur or nitrogen included in the materials is generated as a gas during the heat treatment, thereby minute pores are formed in a path of the gas. Therefore, there are some advantages that insertion and extraction of lithium proceed more easily by the pores, and industrial processing efficiency is higher. Further, as the material of the molded body, a filler having moldability and sinterability may be used. In this case, the binder pitch is not required.

The non-graphitizable carbon having the spacing of the (002) planes of 0.37 nm or over and a true density of less than 1.70 g/cm$^3$, and not showing an exothermic peak at 700°C or over in a differential thermal analysis (DTA) in air is preferable.

Such non-graphitizable carbon can be obtained, for example, through heating the organic material at approximately 1200°C, and pulverizing and classifying the material. Heat treatment is carried out through the following steps. After, if necessary, the material is carbonized at 300°C to 700°C (solid phase carbonization process), a temperature rises to 900°C to 1300°C at a rate of 1°C to 100°C per minute, and the temperature is kept for 0 to 30 hours. Pulverization may be carried out before or after carbonization or during a rise in temperature.

As the organic material as a starting material, for example, a polymer or a copolymer of furfuryl alcohol or furfural, or a furan resin which is a copolymer including macromolecules thereof and any other resin can be used. Moreover, a conjugated resin such as a phenolic resin, an acrylic resin, a vinyl halide resin, a polyimide resin, a polyamide imide resin, a polyamide resin, polyacetylene or polyparaphenylene, cellulose or a derivative thereof, coffee beans, bamboos, crustacea including chitosan, kinds of bio-cellulose using bacteria can be used. Further, a compound in which a functional group including oxygen (O) is introduced into petroleum pitch with, for example, a ratio H/C of the number of atoms between hydrogen (H) and carbon (C) of 0.6 to 0.8 (that is, an oxygen cross-linked compound) can be used.

The percentage of the oxygen content in the compound is preferably 3% or over, and more preferably 5% or over (refer to Japanese Unexamined Patent Application Publication No. Hei 3-252053). The percentage of the oxygen

content has an influence upon the crystalline structure of a carbon material, and when the percentage is the above value or over, the physical properties of the non-graphitizable carbon can be improved, thereby the capacity of the anode 22 can be improved. Moreover, the petroleum pitch can be obtained, for example, by distillation (vacuum distillation, atmospheric distillation or steam distillation), thermal polycondensation, extraction, and chemical polycondensation of tars obtained through thermally cracking coal tar, ethylene bottom oil or crude oil at high temperature, asphalt or the like. Further, as a method of forming an oxygen cross-link, for example, a wet method of reacting a solution such as nitric acid, sulfuric acid, hypochlorous acid or a mixture thereof, and petroleum pitch, a dry method of reacting an oxidizing gas such as air or oxygen and petroleum pitch, or a method of reacting a solid reagent such as sulfur, ammonium nitrate, ammonium persulfate or ferric chloride and petroleum pitch can be used.

In addition, the organic material as the starting material is not limited to them, and any other organic material which can become non-graphitizable carbon through the solid-phase carbonization by an oxygen cross-linking process or the like may be used.

As the non-graphitizable carbon, in addition to the non-graphitizable carbon formed of the above organic material as a starting material, a compound including phosphorus (P), oxygen and carbon (C) as main components which is disclosed in Japanese Unexamined Patent Application Publication No. Hei 3-137010 is preferable, because the above-described parameters of physical properties are exhibited.

As the anode material capable of inserting and extracting lithium, a metal element or a metalloid element capable of forming an alloy with lithium, or an alloy of the metal element or the metalloid element, or a compound of the metal element or the metalloid element is cited. They are preferable because a higher energy density can be obtained, and it is more preferable to use them with a carbon material, because a higher energy density and superior cycle characteristics can be obtained. In the description, the alloy means not only an alloy including two or more kinds of metal elements but also an alloy including one or more kinds of metal elements and one or more kinds of metalloid elements. As the composition of the alloy, a solid solution, a eutectic (eutectic mixture), an intermetallic compound or the coexistence of two or more kinds selected from them is cited.

As such a metal element or a metalloid element, for example, tin (Sn), lead (Pb), aluminum, indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), zirconium (Zr), yttrium (Y) or hafnium (Hf) is cited. As an alloy or a compound thereof, for example, an alloy or a compound represented by a chemical formula $M\alpha_{s1}M\beta_{s2}Li_{s3}$ or a chemical formula $M\alpha_{s4}M\gamma_{s5}M\delta_{s6}$ is cited. In these chemical formulas, $M\alpha$ represents at least one kind selected from metal elements and metalloid elements which can form an alloy with lithium, $M\beta$ represents at least one kind selected from metal elements and metalloid elements except for lithium and $M\alpha$, $M\gamma$ represents at least one kind selected from nonmetal elements, and $M\delta$ represents at least one kind selected from metal elements and metalloid elements except for $M\alpha$. Further, the values of s1, s2, s3, s4, s5 and s6 are $s1>0$, $s2\geqq0$, $s3\geqq0$, $s4>0$, $s5>0$ and $s6\geqq0$, respectively.

Among them, a metal element or a metalloid element selected from Group 4B in the short form of the periodic table of the elements, or an alloy thereof or a compound thereof is preferable, and silicon or tin, or an alloy thereof or a compound thereof is more preferable. They may have a crystalline structure or an amorphous structure.

Specific examples of such an alloy or a compound include LiAl, AlSb, CuMgSb, $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, $SiO_v$ ($0<v\leqq2$), $SnO_w$ ($0<w\leqq2$), $SnSiO_3$, LiSiO, LiSnO and the like.

Moreover, as the anode material capable of inserting and extracting lithium, other metal compounds or high molecular weight materials are cited. As the metal compounds, an oxide such as iron oxide, ruthenium oxide or molybdenum oxide, $LiN_3$, and so on are cited, and as the high molecular weight materials, polyacetylene, polyaniline, polypyrrole and so on are cited.

Moreover, in the secondary battery, during charge, precipitation of lithium metal on the anode 22 begins at a point where an open circuit voltage (that is, battery voltage) is lower than an overcharge voltage. In other words, in a state where the open circuit voltage is lower than the overcharge voltage, the lithium metal is precipitated on the anode 22, so the capacity of the anode 22 includes a capacity component by insertion and extraction of lithium and a capacity component by precipitation and dissolution of the lithium metal, and is represented by the sum of them. Therefore, in the secondary battery, both of the anode material capable of inserting and extracting lithium and the lithium metal have a function as an anode active material, and the anode material capable of inserting and extracting lithium is a base material when the lithium metal is precipitated.

The overcharge voltage means a open circuit voltage when the battery is overcharged, and indicates, for example, a voltage higher than the open circuit voltage of a battery "fully charged" described in and defined by "Guideline for safety assessment of lithium secondary batteries" (SBA G1101) which is one of guidelines drawn up by Japan Storage Battery industries Incorporated (Battery Association of Japan). In other words, the overcharge voltage indicates a higher voltage than an open circuit voltage after charge by using a charging method used when a nominal capacity of each battery is determined, a standard charging method or a recommended charging method. More specifically, the secondary battery is fully charged, for example, at a open circuit voltage of 4.2 V, and the lithium metal is precipitated

on a surface of the anode material capable of inserting and extracting lithium in a part of the range of the open circuit voltage of from 0 V to 4.2 V.

Thereby, in the secondary battery, a higher energy density can be obtained, and cycle characteristics and high-speed charge characteristics can be improved, because of the following reason. The secondary battery is equivalent to a conventional lithium secondary battery using lithium metal or a lithium alloy for the anode in a sense that the lithium metal is precipitated on the anode. However, in the secondary battery, the lithium metal is precipitated on the anode material capable of inserting and extracting lithium, thereby it is considered that the secondary battery has the following advantages.

Firstly, in the conventional lithium secondary battery, it is difficult to uniformly precipitate the lithium metal, which causes degradation in cycle characteristics; however, the anode material capable of inserting and extracting lithium generally has a large surface area, so in the secondary battery, the lithium metal can be uniformly precipitated. Secondly, in the conventional lithium secondary battery, a change in volume according to precipitation and dissolution of the lithium metal is large, which also causes degradation in the cycle characteristics; however, in the secondary battery, the lithium metal is precipitated in gaps between particles of the anode material capable of inserting and extracting lithium, so a change in volume is small. Thirdly, in the conventional lithium secondary battery, the larger the amount of precipitation and dissolution of the lithium metal is, the bigger the above problem becomes; however, in the secondary battery, insertion and extraction of lithium by the anode material capable of inserting and extracting lithium contributes to a charge-discharge capacity, so in spite of a large battery capacity, the amount of precipitation and dissolution of the lithium metal is small. Fourthly, when the conventional lithium secondary battery is quickly charged, the lithium metal is more nonuniformly precipitated, so the cycle characteristics are further degraded. However, in the secondary battery, in initial charge, lithium is inserted into the anode material capable of inserting and extracting lithium, so the secondary battery can be quickly charged.

In order to more effectively obtain these advantages, for example, it is preferable that at the maximum voltage before the open circuit voltage becomes an overcharge voltage, the maximum capacity of the lithium metal precipitated on the anode 22 is from 0.05 times to 3.0 times larger than the charge capacity of the anode material capable of inserting and extracting lithium. When the amount of precipitation of the lithium metal is too large, the same problem as the problem which occurs in the conventional lithium secondary battery arises, and when the amount is too small, the charge-discharge capacity cannot be sufficiently increased. Moreover, for example, the discharge capacity of the anode material capable of inserting and extracting lithium is preferably 150 mAh/g or over. The larger the ability to insert and extract lithium is, the smaller the amount of precipitation of the lithium metal relatively becomes. In addition, the charge capacity of the anode material is determined by the quantity of electricity when the battery with the anode made of the anode material as an anode active material and the lithium metal as a counter electrode is charged by a constant-current constant-voltage method until reaching 0 V. For example, the discharge capacity of the anode material is determined by the quantity of electricity when the battery is subsequently discharged in 10 hours or more by a constant-current method until reaching 2.5 V.

The separator 23 is made of, for example, a porous film of a synthetic resin such as polytetrafluoroethylene, polypropylene or polyethylene, or a porous film of ceramic, and the separator 23 may have a structure in which two or more kinds of the porous films are laminated. Among them, a porous film made of polyolefin is preferably used, because by use of the porous film, a short circuit can be effectively prevented, and the safety of the battery can be improved by a shutdown effect. More specifically, polyethylene can obtain a shutdown effect within a range of from 100°C to 160°C, and is superior in electrochemical stability, so polyethylene is preferably used as the material of the separator 23. Moreover, polypropylene is also preferably used, and any other resin having chemical stability can be used by copolymerizing or blending with polyethylene or polypropylene.

The separator 23 is impregnated with an electrolyte solution which is a liquid electrolyte. The electrolyte solution includes a liquid solvent, for example, a nonaqueous solvent such as an organic solvent, and an electrolyte salt dissolved in the nonaqueous solvent, and the separator 23 may include various additives if necessary. The liquid nonaqueous solvent is made of, for example, a nonaqueous compound with an intrinsic viscosity of 10.0 mPa·s or less at 25°C. The nonaqueous solvent with an intrinsic viscosity of 10.0 mPa·s or less in a state that the electrolyte salt is dissolved therein may be used, and in the case where a plurality of kinds of nonaqueous compounds are mixed to form a solvent, the solvent may have an intrinsic viscosity of 10.0 mPa·s or less in a state that the compounds are mixed.

As such a nonaqueous solvent, various nonaqueous solvents conventionally used can be used. More specifically, carbonate such as propylene carbonate, ethylene carbonate, diethyl carbonate, dimethyl carbonate, ethyl methyl carbonate, vinylene carbonate or vinyl ethylene carbonate or ether such as $\gamma$-butyrolactone, sulfolane, 2-methyltetrahydrofuran or dimethoxyethane is cited. Only one kind or a mixture of a plurality of kinds selected from them may be used. More specifically, in terms of oxidation stability, carbonate is preferable, and among them, carbonate which is an unsaturated compound such as vinylene carbonate or vinyl ethylene carbonate is preferably included, because cycle characteristics and heavy load characteristics can be improved.

As the electrolyte salt, a light metal salt represented by Chemical Formula 1 is preferably included, because

it is considered that the light metal salt can form a stable coating on a surface of the anode during a charge-discharge cycle so as to prevent decomposition of the solvent and a reaction between lithium metal precipitated on the anode 22 and the solvent.

[Chemical Formula 1]

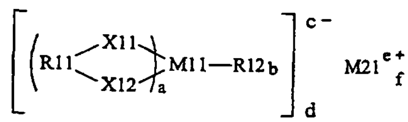

In the formula, R11 represents a group shown in Chemical Formula 2 or 3, R12 represents halogen, an alkyl group, a halogenated alkyl group, an aryl group or a halogenated aryl group, X11 and X12 represent oxygen or sulfur, M11 represents a transition metal element, or a Group 3B element, a Group 4B element or a Group 5B element in the short form of the periodic table of the elements, M21 represents a Group 1A element or a Group 2A element in the short form of the periodic table of the elements, or aluminum, a is an integer of 1 to 4, b is an integer of 0 to 8, and c, d, e and f each are an integer of 1 to 3.

[Chemical Formula 2]

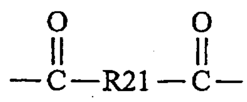

R21 represents an alkylene group, a halogenated alkylene group, an arylene group or a halogenated arylene group.

[Chemical Formula 3]

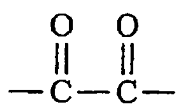

As the light metal salt represented by Chemical Formula 1, a compound represented by Chemical Formula 4 is preferable.

[Chemical Formula 4]

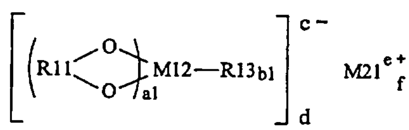

In the formula, R11 represents a group shown in Chemical Formula 2 or 3, R13 represents halogen, M12 represents phosphorus (P) or boron (B), M21 represents a Group 1A element or a Group 2A element in the short form of the periodic table of the elements, or aluminum, a1 is an integer of 1 to 3, b1 is 0, 2 or 4, and c, d, e and f each are an integer of 1 to 3.

More specifically, difluoro[oxalato-O,O']lithium borate represented by Chemical Formula 5, tetrafluoro[oxalato-O,O']lithium phosphate represented by Chemical Formula 6, or diffuorobis[oxalato-O,O']lithium phosphate represented by Chemical Formula 7 is more preferably cited. It is because when a B-O bond or a P-O bond is included, higher effects can be obtained, and specifically, a O-B-O bond or a O-P-O bond is included, further higher effects can be obtained.

[Chemical Formula 5]

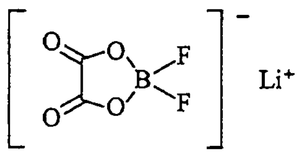

[Chemical Formula 6]

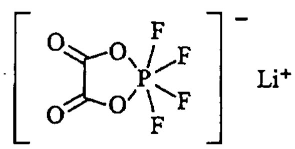

[Chemical Formula 7]

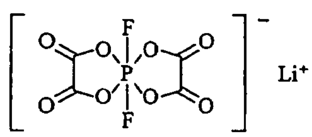

Moreover, the electrolyte salt including one kind or a mixture of two or more kinds of other light metal salts in addition to the light metal salt represented by Chemical Formula 1 is preferably used, because battery characteristics such as storage characteristics can be improved, and a reduction in internal resistance can be achieved so as to improve battery characteristics such as heavy load characteristics. Examples of the other light metal salts include a lithium salt represented by Chemical Formula 8 such as $LiB(C_6H_5)_4$, $LiCH_3SO_3$, $LiCF_3SO_3$, $LiAlCl_4$, $LiSiF_6$, LiCl, LiBr, $LiPF_6$, $LiBF_4$, $LiClO_4$, $LiAsF_6$, $LiN(CF_3SO_2)_2$, $LiN(C_2F_5SO_2)_2$ or $LiN(C_4F_9SO_2)(CF_3SO_2)$, and a lithium salt represented by Chemical Formula 9 such as $LiC(CF_3SO_2)_3$.

[Chemical Formula 8]

$$LiN(C_mF_{2m+1}SO_2)(C_nF_{2n+1}SO_2)$$

In the formula, m and n each represent an integer of 1 or more.

[Chemical Formula 9]

$$LiC(C_pF_{2p+1}SO_2)(C_qF_{2q+1}SO_2)(C_rF_{2r+1}SO_2)$$

In the formula, p, q and r each represent an integer of 1 or more.

Among them, at least one kind selected from the group consisting of $LiPF_6$, $LiBF_4$, $LiClO_4$, $LiAsF_6$, and the lithium salts represented by Chemical Formulas 8 and 9 is preferably included, because higher effects and higher conductivity can be obtained, and the electrolyte salt more preferably includes $LiPF_6$ and at least one kind selected from the group consisting of $LiBF_4$, $LiClO_4$, $LiAsF_6$ and lithium salts represented by Chemical Formulas 8 and 9.

The content (concentration) of the electrolyte salt in the solvent is preferably within a range of 0.3 mol/kg to 3.0 mol/kg, because sufficient battery characteristics may not be obtained out of the range due to a pronounced decline in ionic conductivity. Among them, the contents of the light metal salt represented by Chemical Formula 1 in the solvent is preferably within a range of 0.01 mol/kg to 2.0 mol/kg, because higher effects can be obtained within a range.

Moreover, instead of the electrolyte solution, a gel electrolyte in which a high molecular weight compound holds an electrolyte solution may be used. Any gel electrolyte having an ionic conductivity of 1 mS/cm or over at room temperature may be used, and the composition of the gel electrolyte and the structure of the high molecular weight compound are not specifically limited. The electrolyte solution (that is, the liquid solvent, the electrolyte salt and the additive) is as described above. As the high molecular weight compound, for example, polyacrylonitrile, polyvinylidene fluoride, a copolymer of polyvinylidene fluoride and polyhexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethylmethacrylate, polyacrylic acid, polymethacrylic acid, styrene-butadiene rubber, nitrile-butadiene rubber, polystyrene or polycarbonate is cited. Specifically, in terms of electrochemical stability, a high molecular weight compound having the structure of polyacrylonitrile, polyvinylidene fluoride, polyhexafluoropropylene or polyethylene oxide is preferably used. An amount of the high molecular weight compound added to the electrolyte solution varies depending upon compatibility between them; however, in general, an amount of the high molecular weight compound equivalent to 3% by mass to 50% by mass of the electrolyte solution is preferably added.

Moreover, the content of the lithium salt is the same as in the case of the electrolyte solution. Herein, the solvent widely means not only a liquid solvent but also a material capable of dissociating the electrolyte salt and having ionic conductivity. Therefore, when a high molecular weight compound with ionic conductivity is used as the high molecular weight compound, the high molecular weight compound is also considered as a solvent.

The secondary battery can be manufactured through the following steps, for example.

At first, for example, a cathode material capable of inserting and extracting lithium, an electronic conductor, and a binder are mixed to prepare a cathode mixture, and the cathode mixture is dispersed in a solvent such as N-methyl-2-pyrrolidone to produce cathode mixture slurry in paste form. After the cathode mixture slurry is applied to the cathode current collector 21A, and the solvent is dried, the cathode mixture layer 21B is formed through compression molding by a roller press or the like so as to form the cathode 21.

Next, for example, an anode material capable of inserting and extracting lithium and a binder are mixed to prepare an anode mixture, then the anode mixture is dispersed in a solvent such as N-methyl-2-pyrrolidone to produce anode mixture slurry in paste form. After the anode mixture slurry is applied to the anode current collector 22A, and the solvent is dried, the anode mixture layer 22B is formed through compression molding by a roller press or the like so as to form the anode 22.

Then, the cathode lead 25 is attached to the cathode current collector 21A by welding or the like, and the anode lead 26 is attached to the anode current collector 22A by welding or the like. After that, for example, a laminate including the cathode 21 and the anode 22 with the separator 23 in between is spirally wound, and an end portion of the cathode lead 25 is welded to the safety valve mechanism 15, and an end portion of the anode lead 26 is welded to the battery can 11. Then, the spirally wound laminate including the cathode 21 and the anode 22 is sandwiched between a pair of insulating plates 12 and 13, and then the spirally wound laminate is contained in the battery can 11. After the spirally wound laminate including the cathode 21 and the anode 22 is contained in the battery can 11, the electrolyte is injected into the battery can 11, and the separator 23 is impregnated with the electrolyte. After that, the battery cover 14, the safety valve mechanism 15 and the PTC device 16 are fixed in an opened end portion of the battery can 11 through caulking by the gasket 17. Thereby, the secondary battery shown in FIG. 1 is formed.

In the secondary battery, when charge is carried out, lithium ions are extracted from the cathode mixture layer 21B, and are inserted into the anode material capable of inserting and extracting lithium included in the anode mixture layer 22B through the electrolyte with which the separator 23 is impregnated. When the charge further continues, in a state where the open circuit voltage is lower than the overcharge voltage, the charge capacity exceeds the charge capacity of the anode material capable of inserting and extracting lithium, and then lithium metal begins to be precipitated on the surface of the anode material capable of inserting and extracting lithium. After that, until the charge is completed, precipitation of lithium metal on the anode 22 continues. Thereby, for example, when graphite is used as the anode material capable of inserting and extracting lithium, the color of the surface of the anode mixture layer 22B

changes from black to gold, and then to silver.

Next, when discharge is carried out, at first, the lithium metal precipitated on the anode 22 is eluted as ions, and is inserted into the cathode mixture layer 21B through the electrolyte with which the separator 23 is impregnated. When the discharge further continues, lithium ions inserted into the anode material capable of inserting and extracting lithium in the anode mixture layer 22B are extracted, and are inserted into the cathode mixture layer 21B through the electrolyte. Therefore, in the secondary battery, the characteristics of the conventional lithium secondary battery and the lithium-ion secondary battery, that is, a higher energy density and superior cycle characteristics can be obtained.

Specifically in the embodiment, the electrolyte includes the light metal salt represented by Chemical Formula 1, so it is considered that a stable coating is formed on the surface of the anode 22 during a charge-discharge cycle. Thereby, decomposition of the solvent in the anode 22 and a reaction between the lithium metal precipitated on the anode 22 and the solvent can be prevented. Therefore, lithium metal precipitation-dissolution efficiency can be improved.

Thus, in the embodiment, the electrolyte includes the light metal salt represented by Chemical Formula 1, so the deposition of the solvent in the anode and a reaction between the lithium metal precipitated on the anode 22 and the solvent can be prevented. Therefore, the lithium metal precipitation-dissolution efficiency can be improved, and battery characteristics such as cycle characteristics can be improved.

More specifically, when the compound represented by Chemical Formula 4 is included as the light metal salt represented by Chemical Formula 1, higher effects can be obtained.

Moreover, when any light metal salt other than the light metal salt represented by Chemical Formula 1 is further included, battery characteristics such as storage characteristics can be improved, and the internal resistance can be reduced so as to improve battery characteristics such as heavy load characteristics.

Further, when carbonate which is an unsaturated compound such as vinylene carbonate or vinyl ethylene carbonate is included, battery characteristics such as cycle characteristics and heavy load characteristics can be improved.

[Examples]

Next, specific examples of the invention will be described in more detail below referring to FIGs. 1 and 2.

(Examples 1-1 through 1-25)

Batteries in which the area density ratio of the cathode 21 and the anode 22 was adjusted, and the capacity of the anode 22 included a capacity component by insertion and extraction of lithium and a capacity component by precipitation and dissolution of the lithium, and was represented by the sum of them were formed.

At first, lithium carbonate ($Li_2CO_3$) and cobalt carbonate ($CoCO_3$) were mixed at a ratio (molar ratio) of $Li_2CO_3$:$CoCO_3$=0.5:1, and the mixture was fired in air at 900°C for 5 hours to obtain lithium cobalt complex oxide ($LiCoO_2$) as the cathode material. Next, 91 parts by weight of lithium cobalt complex oxide, 6 parts by weight of graphite as an electronic conductor and 3 parts by weight of polyvinylidene fluoride as a binder were mixed to prepare a cathode mixture. Then, the cathode mixture was dispersed in N-methyl-2-pyrrolidone as a solvent to form cathode mixture slurry. After the cathode mixture slurry was uniformly applied to both sides of the cathode current collector 21A made of strip-shaped aluminum foil with a thickness of 20 µm, and was dried. Then, the cathode mixture layer 21B was formed through compression molding by a roller press so as to form the cathode 21. After that, the cathode lead 25 made of aluminum was attached to an end of the cathode current collector 21A.

Moreover, artificial graphite powder was prepared as an anode material, and 90 parts by weight of the artificial graphite powder and 10 parts by weight of polyvinylidene fluoride as a binder were mixed to prepare an anode mixture. Next, the anode mixture was dispersed in N-methyl-2-pyrrolidone as a solvent to form anode mixture slurry. After the anode mixture slurry was uniformly applied to both sides of the anode current collector 22A made of strip-shaped copper foil with a thickness of 15 µm, and was dried. Then, the anode mixture layer 22B was formed through compression molding by a roller press so as to form the anode 22. Next, the anode lead 26 made of nickel was attached to an end of the anode current collector 22A.

After the cathode 21 and the anode 22 were formed, the separator 23 made of a porous polypropylene film with a thickness of 25 µm was prepared. Then, a laminate including the anode 22, the separator 23, the cathode 21 and the separator 23 in this order was spirally wound several times to form the spirally wound electrode body 20.

After the spirally wound electrode body 20 was formed, the spirally wound electrode body 20 was sandwiched between a pair of insulating plates 12 and 13, and the anode lead 26 was welded to the battery can 11, and the cathode lead 25 was welded to the safety valve mechanism 15. Then, the spirally wound electrode body 20 was contained in the battery can 11 made of nickel-plated iron. After that, the electrolyte solution was injected into the battery can 11 by a decompression method.

As the electrolyte solution, a mixed solvent of 50% by volume of ethylene carbonate and 50% by volume of diethyl carbonate with the light metal salt represented by Chemical Formula 1 or a mixture of the light metal salt represented by Chemical Formula 1 and the other light metal salt as the electrolyte salt dissolved therein was used. At that time, the kinds and the contents of the light metal salt represented by Chemical Formula 1 and the other light metal salt varied in Examples 1-1 through 1-25 as shown in Table 1 or Table 2. Further, in Tables 1 and 2, Chemical Formula 5 represents difluoro[oxalato-O,O']lithium borate, Chemical Formula 6 represents tetrafluoro[oxalato-O,O']lithium phosphate, and Chemical Formula 7 represents difluorobis[oxalato-O,O']lithium phosphate.

[Table 1]

| | LIGHT METAL SALT REPRESENTED BY CHEMICAL FORMULA 1 | | LIGHT METAL SALT OTHER THAN CHEMICAL FORMULA 1 | | INITIAL CAPACITY (mAh) | CYCLE CHARACTERISTICS (%) | HEAVY LOAD CHARACTERISTICS (%) | PRECIPITATION OF Li METAL |
|---|---|---|---|---|---|---|---|---|
| | KIND | CONTENT (mol/kg) | KIND | CONTENT (mol/kg) | | | | |
| EXAMPLE 1-1 | CHEMICAL FORMULA 5 | 1.0 | - | 0 | 1052 | 85.5 | 77 | Y |
| EXAMPLE 1-2 | CHEMICAL FORMULA 5 | 0.9 | $LiPF_6$ | 0.1 | 1054 | 85.3 | 80 | Y |
| EXAMPLE 1-3 | CHEMICAL FORMULA 5 | 0.8 | $LiPF_6$ | 0.2 | 1057 | 85.1 | 82 | Y |
| EXAMPLE 1-4 | CHEMICAL FORMULA 5 | 0.5 | $LiPF_6$ | 0.5 | 1060 | 84.5 | 84 | Y |
| EXAMPLE 1-5 | CHEMICAL FORMULA 5 | 0.2 | $LiPF_6$ | 0.8 | 1061 | 83.7 | 85 | Y |
| EXAMPLE 1-6 | CHEMICAL FORMULA 5 | 0.1 | $LiPF_6$ | 0.9 | 1057 | 82.5 | 84 | Y |
| EXAMPLE 1-7 | CHEMICAL FORMULA 5 | 0.05 | $LiPF_6$ | 0.95 | 1054 | 81.1 | 83 | Y |
| EXAMPLE 1-8 | CHEMICAL FORMULA 5 | 0.01 | $LiPF_6$ | 0.99 | 1052 | 80.0 | 81 | Y |
| EXAMPLE 1-9 | CHEMICAL FORMULA 5 | 1.0 | $LiPF_6$ | 0.2 | 1055 | 85.0 | 82 | Y |

[Table 1] (continued)

| | LIGHT METAL SALT REPRESENTED BY CHEMICAL FORMULA 1 | | LIGHT METAL SALT OTHER THAN CHEMICAL FORMULA 1 | | INITIAL CAPACITY (mAh) | CYCLE CHARACTERISTICS (%) | HEAVY LOAD CHARACTERISTICS (%) | PRECIPITATION OF Li METAL |
|---|---|---|---|---|---|---|---|---|
| | KIND | CONTENT (mol/kg) | KIND | CONTENT (mol/kg) | | | | |
| EXAMPLE 1-10 | CHEMICAL FORMULA 5 | 1.5 | $LiPF_6$ | 0.2 | 1052 | 84.5 | 80 | Y |
| EXAMPLE 1-11 | CHEMICAL FORMULA 5 | 2.0 | $LiPF_6$ | 0.2 | 1050 | 83.8 | 79 | Y |
| EXAMPLE 1-12 | CHEMICAL FORMULA 5 | 0.8 | $LiBF_4$ | 0.2 | 1052 | 83.1 | 80 | Y |
| EXAMPLE 1-13 | CHEMICAL FORMULA 5 | 0.8 | $LiClO_4$ | 0.2 | 1055 | 83.5 | 81 | Y |
| EXAMPLE 1-14 | CHEMICAL FORMULA 5 | 0.8 | $LiAsF_6$ | 0.2 | 1056 | 84.4 | 81 | Y |
| EXAMPLE 1-15 | CHEMICAL FORMULA 5 | 0.8 | $LiN(CF_3SO_2)_2$ | 0.2 | 1057 | 84.8 | 82 | Y |
| EXAMPLE 1-16 | CHEMICAL FORMULA 5 | 0.8 | $LiC(CF_3SO_2)_3$ | 0.2 | 1057 | 84.8 | 82 | Y |
| EXAMPLE 1-17 | CHEMICAL FORMULA 5 | 0.8 | $LiPF_6$ $LiBF_4$ | 0.1 | 1056 | 85.2 | 82 | Y |
| EXAMPLE 1-18 | CHEMICAL FORMULA 5 | 0.8 | $LiPF_6$ | 0.1 | 1056 | 84.9 | 82 | Y |

[Table 1] (continued)

| | LIGHT METAL SALT REPRESENTED BY CHEMICAL FORMULA 1 | | LIGHT METAL SALT OTHER THAN CHEMICAL FORMULA 1 | | INITIAL CAPACITY (mAh) | CYCLE CHARACTERISTICS (%) | HEAVY LOAD CHARACTERISTICS (%) | PRECIPITATION OF Li METAL |
|---|---|---|---|---|---|---|---|---|
| | KIND | CONTENT (mol/kg) | KIND | CONTENT (mol/kg) | | | | |
| EXAMPLE 1-19 | CHEMICAL FORMULA 5 | 0.8 | $LiPF_6$ | 0.1 | 1057 | 85.3 | 83 | Y |
| EXAMPLE 1-20 | CHEMICAL FORMULA 5 | 0.8 | $LiPF_6LiN(CF_3SO_2)_2$ | 0.1 | 1059 | 85.8 | 85 | Y |
| EXAMPLE 1-21 | CHEMICAL FORMULA 5 | 0.8 | $LIPF_6$ $LiC(CF_3SO_2)_3$ | 0.1 | 1059 | 85.5 | 84 | Y |
| EXAMPLE 1-22 | CHEMICAL FORMULA 6 | 1.0 | - | 0 | 1053 | 85.3 | 78 | Y |
| EXAMPLE 1-23 | CHEMICAL FORMULA 6 | 0.8 | $LiPF_6$ | 0.2 | 1057 | 85.2 | 83 | Y |
| COMPARATIVE EXAMPLE 1-1 | - | 0 | $LiPF_6$ | 1.0 | 1050 | 78.5 | 80 | Y |
| COMPARATIVE EXAMPLE 1-2 | - | 0 | $LiPF_6$ | 1.0 | 952 | 90.2 | 75 | N |
| COMPARATIVE EXAMPLE 1-3 | CHEMICAL FORMULA 5 | 1.0 | - | 0 | 942 | 75.2 | 72 | N |

[Table 2]

| | LIGHT METAL SALT REPRESENTED BY CHEMICAL FORMULA 1 | | LIGHT METAL SALT OTHER THAN CHEMICAL FORMULA 1 | | INITIAL CAPACITY (mAh) | CYCLE CHARACTERISTICS (%) | HEAVY LOAD CHARACTERISTICS (%) | PRECIPITATION OF Li METAL |
|---|---|---|---|---|---|---|---|---|
| | KIND | CONTENT (mol/kg) | KIND | CONTENT (mol/kg) | | | | |
| EXAMPLE 1-24 | CHEMICAL FORMULA 7 | 1.0 | - | 0 | 1054 | 85.4 | 78 | Y |
| EXAMPLE 1-25 | CHEMICAL FORMULA 7 | 0.8 | $LiPF_6$ | 0.2 | 1058 | 85.3 | 83 | Y |
| COMPARATIVE EXAMPLE 1-1 | - | 0 | $LiPF_6$ | 1.0 | 1050 | 78.5 | 80 | Y |
| COMPARATIVE EXAMPLE 1-2 | - | 0 | $LiPF_6$ | 1.0 | 952 | 90.2 | 75 | N |
| COMPARATIVE EXAMPLE 1-4 | CHEMICAL FORMULA 7 | 1.0 | - | 0 | 939 | 74.5 | 70 | N |

After the electrolyte solution was injected into the battery can 11, the battery cover 14 was caulked into the battery can 11 by the gasket 17 of which a surface was coated with asphalt so as to obtain the cylindrical secondary batteries with a diameter of 14 mm and a height of 65 mm of Examples 1-1 through 1-25.

As Comparative Example 1-1 relative to Examples 1-1 through 1-25, a secondary battery was formed as in the case of Examples 1-1 through 1-25, except that only $LiPF_6$ was used as the electrolyte salt, and the content was 1.0 mol/kg. Moreover, as Comparative Examples 1-2 through 1-4 relative to Examples 1-1 through 1-25, lithium-ion secondary batteries in which the area density ratio of the cathode and the anode was adjusted, and the capacity of the anode was represented by insertion and extraction of lithium were formed. At that time, in Comparative Example 1-2, $LiPF_6$ was used as the electrolyte salt, and in Comparative Example 1-3, difluoro[oxalato-O,O']lithium borate was used as the electrolyte salt, and in Comparative Example 1-4, difluorobis[oxalato-O,O']lithium phosphate was used as the electrolyte salt.

The obtained secondary batteries of Examples 1-1 through 1-25 and Comparative Examples 1-1 through 1-4 were charged at a constant current of 600 mA until a battery voltage reached 4.2 V, then charge was continued at a constant voltage of 4.2 V until a current reached 1 mA. Then the secondary batteries were discharged at a constant current of 400 mA until the battery voltage reached 3.0 V. Thereby, the initial capacity and the cycle characteristics of each of the secondary batteries were determined. The initial capacity was a discharge capacity in the first cycle, and as the cycle characteristics, a capacity retention ratio of the capacity in the 200th cycle to the initial capacity (a capacity in the first cycle), that is, (the capacity in the 200th cycle/the initial capacity)%100 was determined. Moreover, after the first cycle of charge and discharge was carried out under the above-described conditions, charge and discharge were carried out under the above-described conditions except that a current value during discharge was 2500 mA, thereby heavy load characteristics were determined. As the heavy load characteristics, a ratio of a discharge capacity in the case where discharge was carried out at 2500 mA to a discharge capacity in the case where discharge was carried out at 400 mA was determined. The obtained results are shown in Table 1.

Moreover, after the first cycle of charge and discharge was carried out on the secondary batteries of Examples 1-1 through 1-25 and Comparative Examples 1-1 through 1-4 under the above-described conditions, the batteries were fully charged again, then the fully charged batteries were disassembled to check whether the lithium metal was precipitated on the anode mixture layer 22B by visual inspections and $^7$Li nuclear magnetic resonance spectroscopy. Further, two cycles of charge and discharge were carried out under the above-described conditions to fully discharge the batteries, then the batteries were disassembled to check whether the lithium metal was precipitated on the anode mixture layer 22B in a like manner.

As a result, in the secondary batteries of Examples 1-1 through 1-25 and Comparative Example 1-1, in a full charge condition, precipitation of lithium metal on the anode mixture layer 22B was observed, and in a full discharge condition, no precipitation of lithium metal was observed. In other words, it was confirmed that the capacity of the anode 22 included a capacity component by precipitation and dissolution of lithium metal and a capacity component by insertion and extraction of lithium metal, and was represented by the sum of them. In Table 1, as the results, Y denotes the presence of precipitated lithium metal.

On the other hand, in the secondary batteries of Comparative Examples 1-2 through 1-4, in a full charge condition and a full discharge condition, no precipitation of lithium metal was observed, and only the presence of lithium ions was observed. Moreover, a peak attributed to the lithium ions observed in the full discharge condition was extremely small. In other words, it was confirmed that the capacity of the anode was represented by insertion and extraction of lithium. In Table 1, as the results, N denotes the absence of precipitated lithium metal.

It was obvious from Table 1 that in the secondary batteries of Examples 1-1 through 1-25 using the light metal salt represented by Chemical Formula 1, the cycle characteristics could be enhanced, compared to the secondary battery of Comparative Example 1-1 not using the lithium metal salt. On the other hand, in the lithium-ion secondary batteries of Comparative Examples 1-2 through 1-4, the lithium-ion secondary batteries of Comparative Examples 1-3 and 1-4 using the light metal salt represented by Chemical Formula 1 had lower cycle characteristics than that of Comparative Example 1-2 not using the lithium metal salt.

Moreover, in the secondary batteries of Examples 1-1 through 1-25 in which the capacity of the anode 22 included a capacity component by insertion and extraction of lithium metal and a capacity component by precipitation and dissolution of lithium metal, and was represented by the sum of them, the initial capacity was 1050 mAh or over, but in the lithium-ion secondary batteries of Comparative Examples 1-3 and 1-4, the initial capacity was 950 mAh or less.

In other words, it was found out that when the light metal salt represented by Chemical Formula 1 was included in the secondary battery in which the capacity of the anode 22 included a capacity component by insertion and extraction of lithium metal and a capacity component by precipitation and dissolution of lithium metal, and was represented by the sum of them, a larger capacity could be obtained, and the cycle characteristics could be improved. Moreover, it was confirmed from Examples 1-1 through 1-21 that when the content of the light metal salt represented by Chemical Formula 1 in the solvent was within a range of 0.01 mol/kg to 2.0 mol/kg, characteristics could be improved.

Further, it was found out from comparison between Examples 1-1 through 1-25 that in the secondary batteries

of Examples 1-2 through 1-21, 1-23 and 1-25 in which a mixture of the light metal salt represented by Chemical Formula 1 and the other light metal salt was used, the heavy load characteristics could be higher than that in the secondary batteries of Examples 1-1, 1-22 and 1-24 using only the light metal salt represented by Chemical Formula 1. Among them, in the secondary batteries of Examples 1-17 through 1-21 using a mixture of $LiPF_6$, and $LiBF_4$, $LiClO_4$, $LiAsF_6$, $LiN(CF_3SO_2)_2$ or $LiC(CF_3SO_2)_3$ as the other light metal salt, the initial capacity, the cycle characteristics, and heavy load characteristics could be higher, compared to the secondray batteries of Examples 1-11 through 1-16 using only $LiPF_6$, $LiBF_4$, $LClO_4$, $LiAsF_6$, $LiN(CF_3SO_2)_2$ or $LiC(CF_3SO_2)_3$. It was considered that the heavy load characteristics could be higher, because internal resistance was reduced.

In other words, it was found out that when a mixture of the light metal salt represented by Chemical Formula 1 and the other light metal salt was used, the heavy load characteristics could be improved, and specifically a mixture of $LiPF_6$, and $LiBF_4$, $LiClO_4$, $LiAsF_6$, $LiN(CF_3SO_2)_2$ or $LiC(CF_3\ SO_2)_3$ was preferably used.

(Examples 2-1 through 2-4)

Secondary batteries of Examples 2-1 through 2-4 were formed as in the case of Examples 1-1 and 1-3, except that vinylene carbonate (VC) or vinyl ethylene carbonate (VEC) as carbonate which was an unsaturated compound was added to a mixture of 50% by volume of ethylene carbonate and 50% by volume of diethyl carbonate. The content of vinylene carbonate or vinyl ethylene carbonate in the solvent was 1% by mass.

In the secondary batteries of Examples 2-1 through 2-4, as in the case of Example 1-1, the cycle characteristics and the heavy load characteristics were determined, and whether the lithium metal was precipitated in a full charge condition and in a full discharge condition was checked. The results are shown in Table 3 together with the results of Examples 1-1 and 1-3 and Comparative Examples 1-1 through 1-3.

[Table 3]

| | LIGHT METAL SALT REPRESENTED BY CHEMICAL FORMULA 1 | | LIGHT METAL SALT OTHER THAN CHEMICAL FORMULA 1 | | CARBONATE | INITIAL CAPACITY (mAh) | CYCLE CHARACTERISTICS (%) | HEAVY LOAD CHARACTERISTICS (%) | PRECIPITATION OF Li METAL |
|---|---|---|---|---|---|---|---|---|---|
| | KIND | CONTENT (mol/kg) | KIND | CONTENT (mol/kg) | | | | | |
| EXAMPLE 1-1 | CHEMICAL FORMULA 5 | 1.0 | - | 0 | - | 1052 | 85.5 | 77 | Y |
| EXAMPLE 1-3 | CHEMICAL FORMULA 5 | 0.8 | $LiPF_6$ | 0.2 | - | 1057 | 85.1 | 82 | Y |
| EXAMPLE 2-1 | CHEMICAL FORMULA 5 | 1.0 | - | 0 | VC | 1052 | 86.9 | 80 | Y |
| EXAMPLE 2-2 | CHEMICAL FORMULA 5 | 0.8 | $LiPF_6$ | 0.2 | VC | 1057 | 86.6 | 84 | Y |
| EXAMPLE 2-3 | CHEMICAL FORMULA 5 | 1.0 | - | 0 | VEC | 1053 | 86.7 | 80 | Y |
| EXAMPLE 2-4 | CHEMICAL FORMULA 5 | 0.8 | $LiPF_6$ | 0.2 | VEC | 1059 | 86.4 | 84 | Y |
| COMPARATIVE EXAMPLE 1-1 | - | 0 | $LiPF_6$ | 1.0 | - | 1050 | 78.5 | 80 | Y |

[Table 3] (continued)

| | LIGHT METAL SALT REPRESENTED BY CHEMICAL FORMULA 1 | | LIGHT METAL SALT OTHER THAN CHEMICAL FORMULA 1 | | CARBONATE | INITIAL CAPACITY (mAh) | CYCLE CHARACTERISTICS (%) | HEAVY LOAD CHARACTERISTICS (%) | PRECIPITATION OF Li METAL |
|---|---|---|---|---|---|---|---|---|---|
| | KIND | CONTENT (mol/kg) | KIND | CONTENT (mol/kg) | | | | | |
| COMPARATIVE EXAMPLE 1-2 | - | 0 | $LiPF_6$ | 1.0 | - | 952 | 90.2 | 75 | N |
| COMPARATIVE EXAMPLE 1-3 | CHEMICAL FORMULA 6 | 1.0 | - | 0 | - | 942 | 75.2 | 72 | N |

It was obvious from Table 3 that in the secondary batteries of Examples 2-1 through 2-4 using both carbonate which was an unsaturated compound and the light metal salt represented by Chemical Formula 1, the cycle characteristics and the heavy load characteristics could be higher than those of Examples 1-1 and 1-3 using only the light metal salt represented by Chemical Formula 1. In other words, it was found out that when the light metal salt represented by Chemical Formula 1 and carbonate which was an unsaturated compound were included in the electrolyte solution, higher effects could be obtained.

In the above examples, the description is given referring to specific examples of the light metal salt represented by Chemical Formula 1; however, it is considered that the above effects result from the structure of the light metal salt represented by Chemical Formula 1. Therefore, the same effects can be obtained by using any other light metal salt represented by Chemical Formula 1. Moreover, in the above examples, the case where the electrolyte solution is used is described: however, the same effects can be obtained by using a gel electrolyte.

The present invention is described referring to the embodiment and the examples, but the invention is not limited to the above embodiment and the examples, and is variously modified. For example, in the embodiment and the examples, the case where lithium is used as light metal is described; however, the invention can be applied to the case where any other Group 1A element such as sodium (Na) or potassium (K), a Group 2A element such as magnesium or calcium (Ca), any other light metal such as aluminum, lithium, or an alloy thereof is used, thereby the same effects can be obtained. In this case, the anode material capable of inserting and extracting light metal, the cathode material, the nonaqueous solvent or the like is selected depending upon the light metal.

However, lithium or an alloy including lithium is preferably used as the light metal, because voltage compatibility with lithium-ion secondary batteries which are practically used at present is high. Further, when the alloy including lithium is used as the light metal, a material capable of forming an alloy with lithium may be present in the electrolyte or the anode so as to form an alloy during precipitation.

Moreover, in the above embodiment and the examples, the case where the electrolyte solution or the gel electrolyte which is a kind of solid electrolyte is used is described; however, any other electrolyte may be used. As the electrode, for example, a solid high molecular weight electrolyte in which an electrolyte salt is dispersed in a high molecular weight compound having ionic conductivity, an inorganic ion-conductive compound made of ion-conductive ceramic, ion-conductive glass, ionic crystal or the like, a mixture of the inorganic ion-conductive compound and the electrolyte solution, a mixture of the inorganic ion-conductive compound and the gel electrolyte or a mixture of the inorganic ion-conductive compound and the solid high molecular weight electrolyte is cited.

Further, in the above embodiment and the examples, the cylindrical type secondary battery with a spirally wound structure is described; however, the invention is applicable to an elliptic type or a polygonal type secondary battery with a spirally wound structure, or a secondary battery with a structure in which the cathode and anode are folded or laminated in a like manner. In addition, the invention is applicable to a secondary battery with a coin shape, a button shape, a prismatic shape or the like. Further, the invention is applicable to not only the secondary batteries but also primary batteries.

As described above, in the battery according to the invention, the electrolyte includes the light metal salt represented by Chemical Formula 1, so decomposition of the electrolyte in the anode and a reaction between light metal precipitated on the anode and the electrolyte can be prevented. Therefore, the light metal precipitation-dissolution efficiency and battery characteristics such as the cycle characteristics can be improved.

Specifically, when the electrolyte further includes any light metal salt other than the light metal salt represented by Chemical Formula 1, the battery characteristics such as the storage characteristics can be improved, and the internal resistance can be reduced, thereby the battery characteristics such as the heavy load characteristics can be improved.

Moreover, when the electrolyte includes carbonate which is an unsaturated compound, the battery characteristics such as the cycle characteristics and the heavy load characteristics can be improved.

Obviously many modifications and variations of the present invention are possible in the light of the above teachings. It is therefore to be understood that within the scope of the appended claims the invention may be practiced otherwise than as specifically described.

## Claims

**1.** A battery, comprising:

a cathode;
an anode; and
an electrolyte,

wherein the capacity of the anode includes a capacity component by insertion and extraction of light metal

and a capacity component by precipitation and dissolution of the light metal, and is represented by the sum of them, and

the electrolyte includes a light metal salt represented by Chemical Formula 1.

[Chemical Formula 1]

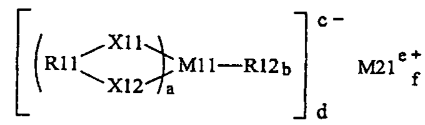

where R11 represents a -C(=O)-R21-C(=O)- group wherein R21 represents an alkylene group, a halogenated alkylene group, an arylene group or a halogenated arylene group or a -C(=O)-C(=O)-group; R12 represents halogen, an alkyl group, a halogenated alkyl group, an aryl group or a halogenated aryl group; X11 and X12 represent oxygen (O) or sulfur (S); M11 represents an transition metal element, or a Group 3B element, a Group 4B element or a Group 5B element in the short form of the periodic table of the elements; M21 represents a Group 1A element or a Group 2A element in the short form of the periodic table of the elements or aluminum (Al); a is an integer of 1 to 4; b is an integer of 0 to 8; and c, d, e and f each are an integer of 1 to 3.

**2.** A battery according to claim 1, wherein

the electrolyte includes a light metal salt represented by Chemical Formula 2.

[Chemical Formula 2]

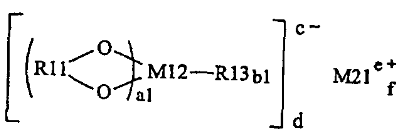

where R11 represents a -C(=O)-R21-C(=O)- group wherein R21 represents an alkylene group, a halogenated alkylene group, an arylene group or a halogenated arylene group or a -C(=O)-C(=O)-group, R13 represents halogen; M12 represents phosphorus (P) or boron (B); M21 represents a Group 1A element or a Group 2A element in the short form of the periodic table of the elements or aluminum; a1 is an integer of 1 to 3; b1 is 0, 2 or 4; and c, d, e and f each are an integer of 1 to 3.

**3.** A battery according to claim 1, wherein

the electrolyte includes difluoro[oxalato-O,O']lithium borate represented by Chemical Formula 3, tetrafluoro [oxalato-O,O']lithium phosphate represented by Chemical Formula 4 or difluorobis[oxalato-O,O']lithium phosphate represented by Chemical Formula 5.

[Chemical Formula 3]

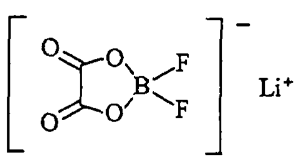

[Chemical Formula 4]

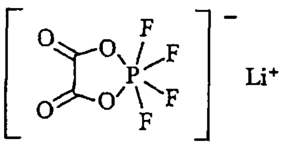

[Chemical Formula 5]

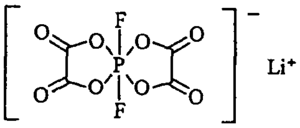

**4.** A battery according to claim 1, wherein
the electrolyte further includes any light metal salt other than the light metal salt represented by Chemical Formula 1.

**5.** A battery according to claim 1, wherein
the electrolyte further includes at least one kind selected from the group consisting of $LiPF_6$, $LiBF_4$, $LiClO_4$, $LiAsF_6$, a lithium salt represented by Chemical Formula 6 and a lithium salt represented by Chemical Formula 7.

[Chemical Formula 6]

$$LiN(C_mF_{2m+1}SO_2)(C_nF_{2n+1}SO_2)$$

where m and n each are an integer of 1 or more.

[Chemical Formula 7]

$$LiC(C_pF_{2p+1}SO_2)(C_qF_{2q+1}SO_2)(C_rF_{2r+1}SO_2)$$

where p, q and r each are an integer of 1 or more.

**6.** A battery according to claim 1, wherein
the electrolyte further includes $LiPF_6$, and at least one kind selected from the group consisting of $LiBF_4$, $LiClO_4$, $LiAsF_6$, a lithium salt represented by Chemical Formula 6, and a lithium salt represented by Chemical Formula 7.

**7.** A battery according to claim 1, wherein
the electrolyte further includes a solvent, and the content of the light metal salt represented by Chemical Formula 1 in the solvent is within a range of 0.01 mol/kg to 2.0 mol/kg inclusive.

**8.** A battery according to claim 1, wherein
the electrolyte further includes carbonate which is an unsaturated compound.

**9.** A Battery according to claim 1, wherein
the electrolyte further includes vinylene carbonate or vinyl ethylene carbonate.

**10.** A battery according to claim 1, wherein
the cathode includes lithium (Li), at least one kind selected from the group consisting of cobalt (Co), nickel (Ni), manganese (Mn) and iron (Fe), and a lithium-containing compound including oxygen (O).

**11.** A battery according to claim 1, wherein
the anode includes an anode material capable of inserting and extracting light metal.

**12.** A battery according to claim 1, wherein
the electrolyte further includes a high molecular weight compound or an inorganic ion-conductive compound.

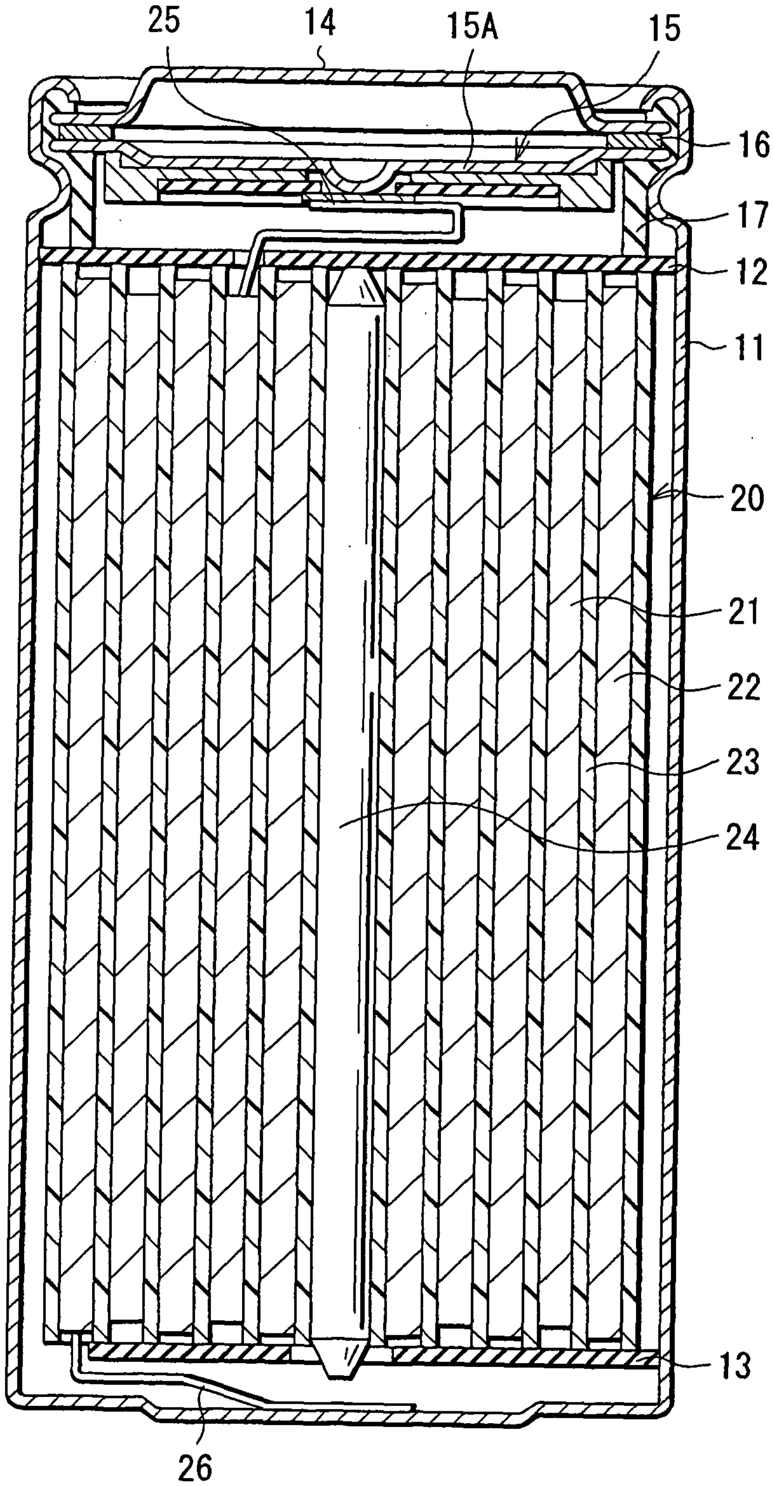


FIG. 1

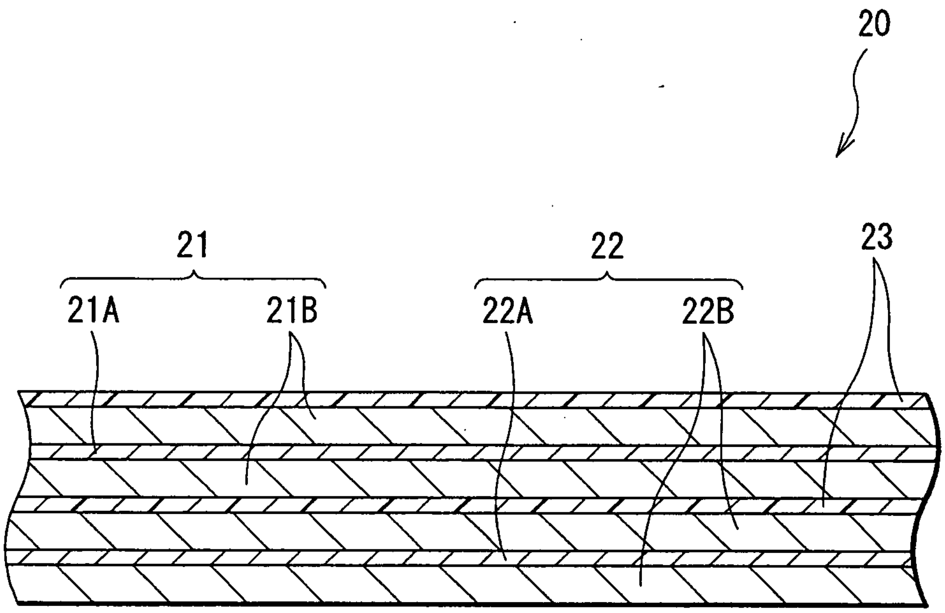


FIG. 2